# EUROPÄISCHE PATENTSCHRIFT

(11) **EP 1 063 453 B1**
(45) Veröffentlichungstag und Bekanntmachung des Hinweises auf die Patenterteilung: **26.01.2005**
(21) Anmeldenummer: 00111763.9
(22) Anmeldetag: 03.06.2000
(51) Int. Cl.: F16H 63/48, B60K 28/04

(54) **Steuereinrichtung zur Realisierung einer automatischen Park-und/oder Wegrollsperre für ein Kraftfahrzeug**
Control unit for an automatic parking lock of a vehicle
Unité de commande de blocage automatique de stationnement pour véhicules automobiles

(30) Priorität: 25.06.1999 DE 19929360
(43) Veröffentlichungstag der Anmeldung: 27.12.2000
(73) Patentinhaber: Volkswagen Aktiengesellschaft, 38436 Wolfsburg (DE)
(72) Erfinder: Carl, Frank, 38106 Braunschweig (DE); Hofmann, Rainer, 38106 Braunschweig (DE); Christmann, Ralf, 38518 Gifhorn (DE); Krause, Heinrich, 38477 Jembke (DE); Kruse, Georg, 38518 Gifhorn (DE); Nicke, Dirk, 38106 Braunschweig (DE); Marx, Volker, 29379 Wittingen (DE); Schamscha, Axel, 38458 Velpke (DE)
(74) Vertreter: Lindner, Manfred Klaus, Dipl.-Phys.

(56) Entgegenhaltungen:
- EP-A- 0 668 181
- US-A- 1 380 887
- US-A- 4 892 014

## Beschreibung

Die Erfindung betrifft eine Steuereinrichtung zur Realisierung einer automatischen Parkund/oder Wegrollsperre für ein Kraftfahrzeug, mit den Merkmalen des Oberbegriffs von Anspruch 1.

Im Stand der Technik sind unterschiedlich ausgebildete bzw. auf unterschiedliche Art und Weise realisierte automatische Park- und/Wegrollsperren für ein Kraftfahrzeug bekannt. So beschreibt die gattungsgemäße DE-A-197 29 354 eine Park und/oder Wegrollsperre für ein Kraftfahrzeug, das ein automatisiertes Schaltgetriebe aufweist. Hier wird automatisch die Parkposition "P" eingelegt, wenn der Zündschlüssel vom Fahrer abgezogen wird. Wird der Zündschlüssel abgezogen, so kann die Parksperre durch das automatische Einlegen eines Ganges im automatisierten Schaltgetriebe realisiert werden. Es ist ein Steuergerät vorhanden, mit Hilfe dessen diese Steuerung, d.h. das Einlegen des Ganges entsprechend gesteuert wird, beispielsweise wird bei hohen Fahrzeuggeschwindigkeiten, wenn der Zündschlüssel im Betriebszustand des Kraftfahrzeuges abgezogen wird, in dieser Situation die Parksperre eben nicht automatisch eingelegt. Die Fahrzeuggeschwindigkeit wird über einen entsprechenden Sensor gemessen, der beispielsweise im Bereich der Getriebeabtriebswelle angeordnet ist und als Induktivgeber ausgeführt sein kann. Ein automatisches Einlegen der Parksperre erfolgt, wenn der Zündschlüssel vom Fahrer abgezogen wird und die Fahrgeschwindigkeit "Null" ist, also das Fahrzeug steht.

Weiterhin ist eine Steuereinrichtung bekannt (DE-A-196 25 019), wobei bei einem Kraftfahrzeug mit einem automatisch geschalteten Getriebe die Parksperre automatisch im geschalteten Getriebe eingelegt wird, wenn die Fahrzeuggeschwindigkeit des Kraftfahrzeuges gleich "Null" ist, gleichzeitig der Zündstromkreis mit dem Zündschlüssel unterbrochen wurde und zusätzlich noch eine vorbestimmte Zeitspanne verstrichen ist. Weiterhin kann die Parksperre auch automatisch mit Hilfe eines Steuergerätes eingelegt werden, wenn der Zündstromkreis unterbrochen ist und zusätzlich eine Fahrzeugtür, vzw. die Fahrertür geöffnet wird. Das Öffnen der Fahrzeugtür wird hier als Indiz dafür genommen, daß der Fahrer das Kraftfahrzeug verlassen möchte.

Die im Stand der Technik bekannten Steuereinrichtungen zur Realisierung einer automatischen Park und/oder Wegrollsperre sind nicht optimal ausgebildet, da sie nicht unbedingt immer definitiv erfassen können, ob der Fahrer das Kraftfahrzeug nun wirklich verlassen hat oder nicht. Beispielsweise kann ein Fahrer durchaus im Kraftfahrzeug, d.h. im Fahrgastraum verbleiben und trotzdem den Zündschlüssel abziehen. In diesem Fall würde die Park- und/oder Wegrollsperre automatisch eingelegt werden, obwohl der Fahrer das Kraftfahrzeug noch nicht verlassen hat. Auch eine geöffnete Fahrzeugtür ist nicht unbedingt definitiv ein Indiz dafür, daß der Fahrer das Kraftfahrzeug verlassen will, beispielsweise ist es in Hochsommer-Monaten durchaus üblich, daß Fahrer im Fahrgastraum sitzend verbleiben, wenn sie u.a. auf einen Beifahrer warten, und dann die Fahrertür geöffnet ist, um eine Hitzestauung innerhalb des Fahrgastraumes zu vermeiden. Selbst die Kombination einer geöffneten Fahrertür mit einem abgezogenen Zündschlüssel ist kein eindeutiges Indiz für den Wunsch des Fahrers, das Kraftfahrzeug zu verlassen. Im Ergebnis sind die bisher im Stand der Technik bekannten Steuereinrichtungen nicht so ausgebildet, daß ein vom Fahrer "verlassenes Kraftfahrzeug" als entsprechender "Betriebszustand" eindeutig identifizierbar wäre, da insbesondere es auch durchaus üblich ist, daß Fahrer das Kraftfahrzeug verlassen, ohne den Zündschlüssel abzuziehen, oder ohne die Zündung auszuschalten, wenn beispielsweise nur sehr kurzfristig - wenige Meter vom Kraftfahrzeug entfernt - etwas erledigt werden muß.

Aus der DE 196 32 863 A1 ist ein Kraftfahrzeug mit einer fremdkraftbetätigten Feststellbremsanlage, die sowohl über einen hydraulischen Druckerzeuger als auch über eine elektromechanische Stelleinheit betätigt werden kann. Eine Steuereinheit bewirkt, dass je nach Betriebszustand des Fahrzeuges zwischen hydraulischer und elektromechanischer Betätigung gewählt wird, d.h., dass die Feststellbremsanlage je nach Betriebszustand des Fahrzeuges hydraulisch oder elektromechanisch betätigt wird oder dass die Feststellbremsanlage je nach Betriebszustand des Fahrzeuges von hydraulischer auf elektromechanische Betätigung oder umgekehrt geschaltet wird.

Der Erfindung liegt daher die Aufgabe zugrunde, eine Steuereinrichtung der eingangs genannten Art derart auszugestalten und weiterzubilden, daß der Betriebszustand "vom Fahrer verlassenes Kraftfahrzeug" auch als solcher einwandfrei identifizierbar ist und die Sicherheit erhöht ist.

Die zuvor aufgezeigte Aufgabe ist mit einer Steuereinrichtung nach Anspruch 1 gelöst. Dadurch, daß mit Hilfe eines Gurtschloßsensors oder eines Sitzplatzbelegungssensors festgestellt werden kann, ob das Gurtschloß des Sicherheitsgurtes geschlossen ist und/oder ob der Sitzplatz, nämlich der Fahrersitz belegt ist, kann in einwandfreier und auf kostengünstige Art und Weise ein vom Fahrer "verlassenes Fahrzeug" eindeutig als solches identifiziert werden. Da es gemäß der Straßenverkehrsordnung für den Fahrer eines Kraftfahrzeuges - abgesehen von entsprechenden Ausnahmeregelungen - Pflicht ist, den entsprechenden Sicherheitsgurt zu schließen, kann durch die Öffnung des Gurtschlosses bzw. des geöffneten Gurtschlosses entsprechend ermittelt werden, daß der Fahrer den Wunsch hegt, das Kraftfahrzeug zu verlassen. Andererseits ist die Identifizierung eines vom Fahrer "verlassenen Kraftfahrzeugs" durch einen Sitzplatzbelegungssensor möglich. Durch einen im Fahrgastraum an einer entsprechend geeigneten Stelle vorgesehenen Sitzplatzbelegungssensor wird definitiv festgestellt, ob sich ein Fahrer auf dem Sitzplatz, also im Fahrgastraum des Kraftfahrzeuges befindet oder nicht. Im Ergebnis wird, wenn der Sitzplatz nicht belegt ist oder das Gurtschloß nicht geschlossen ist, daher genau in diesen Momenten dann die automatische Park- und/oder Wegrollsperre eingelegt, so daß die eingangs beschriebenen Nachteile vermieden sind.

Es gibt nun eine Vielzahl von Möglichkeiten, die erfindungsgemäße Steuereinrichtung zur Realisierung einer automatischen Park- und/oder Wegrollsperre auszugestalten und weiterzubilden, wozu zunächst auf die dem Patentanspruch 1 nachgeordneten Patentansprüche verwiesen wird. Im folgenden werden nun anhand einer Beschreibung sowie der Zeichnung bevorzugte Ausführungsbeispiele der erfindungsgemäßen Steuereinrichtung näher beschrieben.

In der Zeichnung zeigt:
- Fig. 1: in einer stark vereinfachten schematischen Darstellung ein erstes Ausführungsbeispiel für eine erfindungsgemäße Steuereinrichtung zur Realisierung der automatischen Park- und/oder Wegrollsperre mit einem Gurtschloßsensor und
- Fig. 2: in einer stark vereinfachten schematischen Darstellung ein zweites Ausführungsbeispiel für eine erfindungsgemäße Steuereinrichtung zur Realisierung der automatischen Park- und/oder Wegrollsperre mit einem Sitzplatzbelegungssensor.

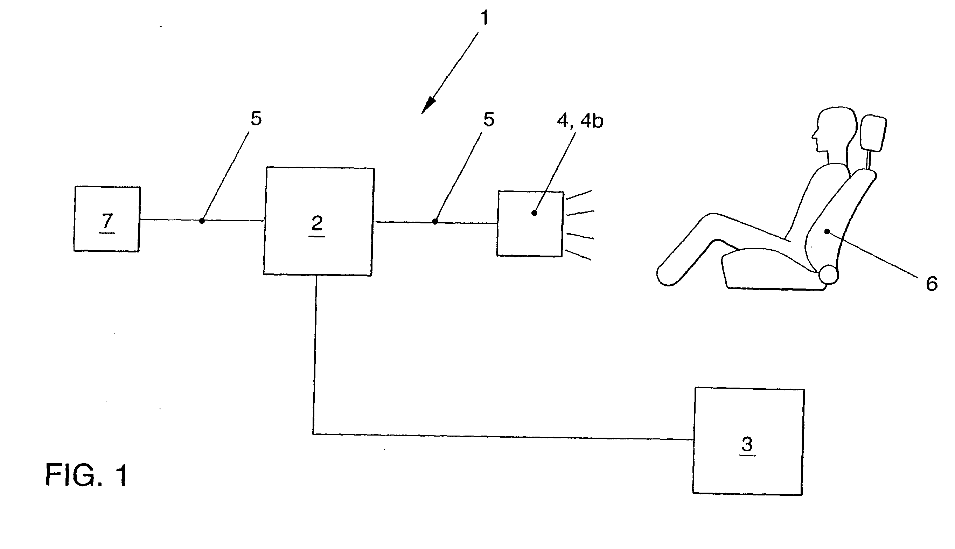

Fig. 1 zeigt in stark vereinfachter schematischer Darstellung eine Steuereinrichtung 1 zur Realisierung einer automatischen Park- und/oder Wegrollsperre für ein nicht näher dargestelltes Kraftfahrzeug. Die Steuereinrichtung 1 weist ein Steuergerät 2, einen Aktuator 3 und einen Sensor 4 auf. Das Steuergerät 2, der Aktuator 3 und der Sensor 4 sind schaltungstechnisch über entsprechende Leitungen 5 verbunden.

Die Park- und/oder Wegrollsperre ist mit Hilfe des Aktuators 3 realisierbar, was im folgenden noch näher erläutert werden wird. Wenn nun das Steuergerät 2 ein vom Sensor 4 erzeugtes entsprechendes Signal erhält, wird die Park- und/oder Wegrollsperre mit Hilfe des Aktuators 3 realisiert. Es gibt mehrere Möglichkeiten für die Ausführung bzw. Ausbildung des Aktuators 3, was im folgenden noch erläutert werden soll und weswegen der Aktuator 3 hier nur schematisch angedeutet ist.

Die einwandfreie Identifizierung des Betriebszustandes eines vom Fahrer "verlassenen Fahrzeugs" ist nun dadurch möglich, daß der Sensor 4 als Gurtschloßsensor 4a oder als Sitzplatzbelegungssensor 4b ausgeführt ist. Hierdurch ist einwandfrei erkennbar, ob ein Fahrer sich innerhalb des Fahrgastraumes eines Kraftfahrzeugs befindet oder nicht, so daß eine einwandfreie Identifizierung eines "verlassenen Fahrzeugs" möglich ist.

Es gibt nun für den Durchschnittsfachmann unterschiedliche Möglichkeiten, insbesondere auch schaltungstechnischer Art, die erfindungsgemäße Steuereinrichtung 1 zu realisieren, weshalb hier nur die stark vereinfachte schematische Darstellung gewählt ist. Die Steuereinrichtung 1 kann auf elektrischer und/oder elektronischer Basis realisiert werden.

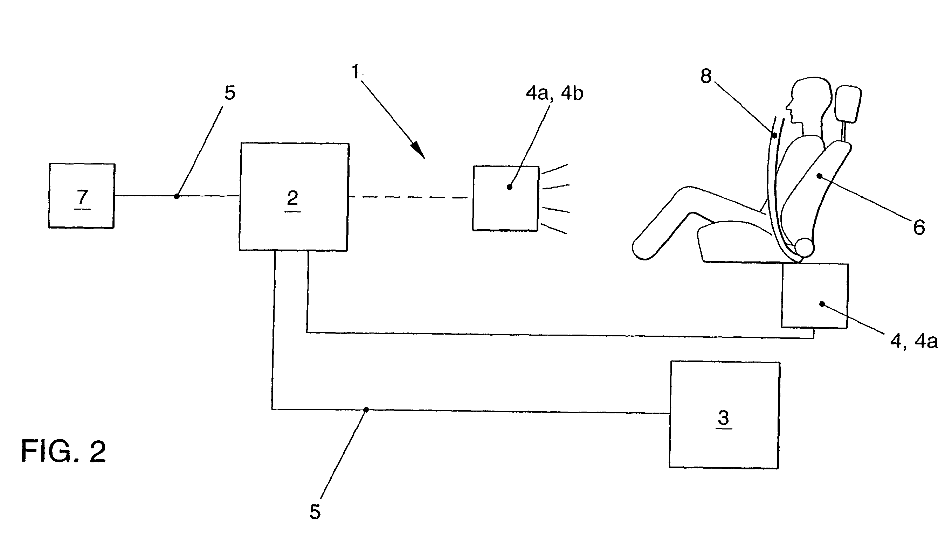

Wenn beispielsweise, wie in Fig. 2 dargestellt, durch den als Gurtschloßsensor 4a ausgebildeten Sensor 4 der Zustand des Sicherheitsgurtes 8 erfaßt ist bzw. wird, also der Gurtschloßsensor 4a, der im Bereich des Gurtschlosses für den Sicherheitsgurt 8 angeordnet ist, einen geöffneten oder geschlossenen Zustand Gurtschlosses des Sicherheitsgurtes 8 ermittelt, wird vom Gurtschloßsensor 4a ein entsprechendes Signal an das Steuergerät 2 abgegeben. Hieraufhin wird vom Steuergerät 2 der Aktuator 3 angesteuert, der die Park- und/oder Wegrollsperre realisiert. Beispielsweise kann der Gurtschloßsensor 4a als elektrischer Kontaktschalter ausgebildet sein, d.h. daß ein entsprechender Stromkreis geschlossen wird, wenn das Gurtschloß geschlossen ist und der entsprechende Stromkreis unterbrochen wird, wenn das Gurtschloß geöffnet ist (schaltungstechnisch ist auch eine entsprechende Umkehrung denkbar).

Der Sitzplatzbelegungssensor 4b - wie in Fig. 1b gezeigt - ermittelt den Zustand des hier schematisch angedeuteten Sitzplatzes 6, ob also ein Fahrer auf dem Fahrersitz Platz genommen hat bzw. sitzt oder nicht. Es gibt ganz unterschiedliche Möglichkeiten, wie denn der Sitzplatzbelegungssensor 4b ausgeführt sein kann. Beispielsweise kann der Sitzplatzbelegungssensor 4b als Ultraschall-Sensor und/oder Lichtschrankensensor ausgeführt sein und im Bereich der Decke über dem Sitzplatz 6 entsprechend angeordnet sein, so daß er den Zustand des Fahrersitzes, nämlich des Sitzplatzes 6 entsprechend ermitteln kann. Es ist aber auch denkbar, daß innerhalb des Sitzplatzes 6 entsprechende Sensoren 4 vorgesehen sind, die beispielsweise als Drucksensoren ausgebildet sind, also durch das Gewicht des auf dem Sitzplatz 6 sitzenden Fahrers auslösbar sind. Weiterhin sind hier auch entsprechende elektrische Kontaktschalter denkbar, die beispielsweise innerhalb des im Fahrersitz angeordneten Federsystems angeordnet sind und bei einer entsprechenden Bewegung, nämlich Eindrückung der Sitzfläche durch den Fahrer, entsprechend geschlossen werden.

Entscheidend ist, daß nun, wie der Sensor 4 auch immer ausgestaltet sein mag, der Sensor 4 ein entsprechendes Signal an das Steuergerät 2 abgibt. In diesem Fall, wenn durch den Sensor 4 ermittelt worden ist, daß entweder das Gurtschloß des Sicherheitsgurtes 8 geöffnet oder der Sitzplatz 6 nicht belegt ist, wird der Aktuator 3 entsprechend angesteuert und betätigt. Der Aktuator 3 kann beispielsweise die Handbremse des Kraftfahrzeuges entsprechend betätigen, nämlich anziehen. Hierzu kann der Aktuator 3 als Elektromotor ausgeführt sein und bspw. noch zusätzlich einen Aktuator-Getriebebereich aufweisen. Es ist aber auch denkbar, daß der Aktuator 3 als eine hydraulische Kolben-Zylindereinheit ausgeführt ist. Wichtig ist, daß die Ansteuerung des Aktuators 3 über das Steuergerät 2 bei Vorliegen des Signales vom Sensor 4 erfolgt.

Weiterhin ist denkbar, daß, wenn das Kraftfahrzeug ein automatisiertes Schaltgetriebe aufweist, über den Gangsteller des Getriebes, der entsprechend mit dem Steuergerät 2 schaltungstechnisch verbunden ist, der dann als Gangsteller ausgeführte Aktuator 3 auch einen Gang innerhalb des Krafttahrzeug-Schaltgetriebes automatisch einlegt, wenn das Gurtschloß geöffnet oder der Sitzplatz 6 nicht belegt ist. Hierzu wird dann der als Gangsteller ausgeführte Aktuator 3 vom Steuergerät 2 entsprechend angesteuert, wenn das Signal des Sensors 4 vorliegt.

Weiterhin sind weitere zusätzliche Sensoren, beispielsweise ein zweiter Sensor 7 vorgesehen, der wie ein Türöffnungssensor als Motorhauben- oder Kofferraumklappenöffnungssensor ausgeführt ist. Dies hat den Vorteil, daß beispielsweise bei nicht vom Fahrer verlassenem Kraftfahrzeug durch den Fahrer die zusätzliche Sicherheit gegeben ist, daß das Kraftfahrzeug auch gegen Wegrollen automatisch gesperrt wird, wenn beispielsweise eine dritte Person die Motorhaube bzw. die Kofferraumklappe öffnet und so das Kraftfahrzeug auch bei im Kraftfahrzeug sitzendem Fahrer automatisch gegen Wegrollen gesichert ist. Denkbar ist dies beispielsweise nach dem Vorfahren bei einer Tankstelle, wo der hilfsbereite Tankwart den im Fahrzeug sitzenden Fahrer weiterhilft. Hier wäre das Kraftfahrzeug entsprechend gegen Wegrollen gesichert, wenn beispielsweise der Tankwart die Motorhaube öffnet, so daß hierdurch eine zusätzliche Sicherheit gegeben ist. Schaltungstechnisch realisiert wird die durch das Steuergerät 2.

Weiterhin kann es sinnvoll sein, daß alle oder eine Mehrzahl der genannten Sensoren mit dem Steuergerät 2 verbunden sind (Fig. 2).

Im Ergebnis wird durch die erfindungsgemäße Steuereinrichtung 1 die Sicherheit für Dritte und auch den Fahrzeuginsassen erheblich erhöht.

### BEZUGSZEICHENLISTE

- 1: Steuereinrichtung
- 2: Steuergerät
- 3: Aktuator
- 4: Sensor
- 4a: Gurtschloßsensor
- 4b: Sitzplatzbelegungssensor
- 5: Leitungen
- 6: Sitzplatz
- 7: 2. Sensor
- 8: Sicherheitsgurt

## Patentansprüche

1. Steuereinrichtung (1) zur Realisierung einer automatischen Park- und/oder Wegrollsperre für ein Kraftfahrzeug, mit einem Steuergerät (2) , mindestens einem Aktuator (3) und mindestens einem Sensor (4) , wobei das Steuergerät (2), der Aktuator (3), und der Sensor (4) schaltungstechnisch verbunden sind und eine Parkund/oder Wegrollsperre mit Hilfe des Aktuators (3) realisierbar ist, wenn das Steuergerät (2) ein vom Sensor (4) erzeugtes entsprechendes Signal erhält, wobei der Sensor (4) als Gurtschlosssensor (4a) und/oder Sitzplatzbelegungssensor (4b) ausgeführt ist, **dadurch gekennzeichnet, daß** zusätzlich ein zweiter Sensor (7) vorgesehen ist, der als Motorhauben- oder Kofferraumklappenöffnungssensor ausgeführte ist.

2. Steuereinrichtung nach Anspruch 1, **dadurch gekennzeichnet, dass** durch den als Gurtschlosssensor (4a) ausgebildeten Sensor (4) der Zustand des Gurtschlosses des Sicherheitsgurtes (8), nämlich der geöffnete oder der geschlossene Zustand erfassbar ist.

3. Steuereinrichtung nach Anspruch 1 oder 2, **dadurch gekennzeichnet, dass** durch den als Sitzplatzbelegungssensor (4b) ausgebildeten Sensor (4) der Zustand des Sitzplatzes (6), nämlich die Belegung oder Nicht-Belegung des Sitzplatzes (6) durch einen Fahrer erfassbar ist.

4. Steuereinrichtung nach einem der vorhergehenden Ansprüche, **dadurch gekennzeichnet, dass** durch den Aktuator (3) die Handbremse des Kraftfahrzeuges betätigbar ist.

5. Steuereinrichtung nach einem der vorhergehenden Ansprüche, **dadurch gekennzeichnet, dass** der Aktuator (3) als Elektromotor ausgeführt ist.

6. Steuereinrichtung nach einem der vorhergehenden Ansprüche, **dadurch gekennzeichnet, dass** der Aktuator (3) als hydraulische Kolben-Zylindereinheit ausgeführt ist.

7. Steuereinrichtung nach einem der vorhergehenden Ansprüche, **dadurch gekennzeichnet, dass** der Aktuator (3) als Gangsteller ausgeführt ist und der Gangsteller das Einlegen eines Getriebeganges eines automatisierten SchaltGetriebes realisiert.

## Claims

1. Control device (1) for implementing an automatic parking brake and/or roll-away preventer for a motor vehicle, having a control device (2), at least one actuator (3) and at least one sensor (4), wherein the control device (2), the actuator (3) and the sensor (4) are connected by circuitry and a parking brake and/or roll-away preventer can be implemented by means of the actuator (3) if the control device (2) receives a corresponding signal which is generated by the sensor (4), wherein the sensor (4) is embodied as a seat belt lock sensor (4a) and/or seat occupancy sensor (4b), **characterized in that** in addition a second sensor (7) is provided which is embodied as an engine bonnet sensor or boot lid opening sensor.

2. Control device according to Claim 1, **characterized in that** the state of the belt lock of the seat belt (8), specifically the opened state and the closed state can be sensed by the sensor (4) which is embodied as a seat belt lock sensor (4a).

3. Control device according to Claim 1 or 2, **characterized in that** the state of the seat (6), specifically the occupancy or non-occupancy of the seat (6) can be sensed by a driver by means of the sensor (4) which is embodied as a seat occupancy sensor (4b).

4. Control device according to one of the preceding claims, **characterized in that** the hand brake of the motor vehicle can be activated by the actuator (3).

5. Control device according to one of the preceding claims, **characterized in that** the actuator (3) is embodied as an electric motor.

6. Control device according to one of the preceding claims, **characterized in that** the actuator (3) is embodied as a hydraulic piston cylinder unit.

7. Control device according to one of the preceding claims, **characterized in that** the actuator (3) is embodied as a gear selector, and the gear selector engages a gear speed of an automatic transmission.

## Revendications

1. Unité de commande (1) pour la réalisation d'un blocage automatique de stationnement pour un véhicule automobile, comprenant un appareil de commande (2), au moins un actionneur (3) et au moins un détecteur (4), l'appareil de commande (2), l'actionneur (3) et le détecteur (4) étant branchés en circuit et un blocage de stationnement pouvant être réalisé à l'aide de l'actionneur (3) lorsque l'appareil de commande (2) reçoit un signal correspondant produit par le détecteur (4), le détecteur (4) étant réalisé en tant que détecteur d'enclenchement de ceinture de sécurité (4a) et/ou en tant que détecteur d'occupation de siège (4b), **caractérisée en ce qu'**en outre un deuxième détecteur (7) est prévu, lequel est réalisé en tant que détecteur d'ouverture du capot du moteur ou du coffre à bagages.

2. Unité de commande selon la revendication 1, **caractérisée en ce que** l'état d'enclenchement de la ceinture de sécurité (8), à savoir son état ouvert ou fermé, peut être détecté par le détecteur (4) réalisé en tant que détecteur d'enclenchement de ceinture de sécurité (4a).

3. Unité de commande selon la revendication 1 ou 2, **caractérisée en ce que** l'état du siège (6), à savoir l'occupation ou la non occupation du siège (6) par un conducteur, peut être détecté par le détecteur (4) réalisé en tant que détecteur d'occupation de siège (4b).

4. Unité de commande selon l'une quelconque des revendications précédentes, **caractérisée en ce que** le frein à main du véhicule automobile peut être actionné par l'actionneur (3).

5. Unité de commande selon l'une quelconque des revendications précédentes, **caractérisée en ce que** l'actionneur (3) est réalisé en tant que moteur électrique.

6. Unité de commande selon l'une quelconque des revendications précédentes, **caractérisée en ce que** l'actionneur (3) est réalisé en tant qu'unité hydraulique cylindre-piston.

7. Unité de commande selon l'une quelconque des revendications précédentes, **caractérisée en ce que** l'actionneur (3) est réalisé en tant que dispositif de sélection de vitesse et le dispositif de sélection de vitesse réalise la sélection d'un rapport de vitesse d'une transmission automatique.
